# EUROPÄISCHE PATENTSCHRIFT

(11) **EP 3 862 269 B1**
(45) Veröffentlichungstag und Bekanntmachung des Hinweises auf die Patenterteilung: **05.01.2022**
(21) Anmeldenummer: 21155359.9
(22) Anmeldetag: 05.02.2021
(51) Int. Cl.: B64D 11/00

(54) **STAUFACH FÜR EIN FLUGZEUG SOWIE FLUGZEUG MIT DEM STAUFACH**
STORAGE COMPARTMENT FOR AN AIRCRAFT AND AIRCRAFT HAVING THE STORAGE COMPARTMENT
COMPARTIMENT DE RANGEMENT POUR UN AVION, AINSI QU'AVION POURVU DU COMPARTIMENT DE RANGEMENT

(30) Priorität: 08.02.2020 DE 102020000834
(43) Veröffentlichungstag der Anmeldung: 11.08.2021
(73) Patentinhaber: Diehl Aviation Laupheim GmbH, 88471 Laupheim (DE)
(72) Erfinder: Siessegger, Daniel, 88480 Achstetten (DE); Pfinder, Dirk, 88481 Balzheim (DE)
(74) Vertreter: Diehl Patentabteilung

(56) Entgegenhaltungen:
- EP-A1- 2 995 554
- EP-B1- 2 995 554
- WO-A1-2016/007915
- DE-U1-202015 102 842
- US-A1- 2016 221 511

## Beschreibung

Die Erfindung betrifft ein Staufach für ein Flugzeug mit den Merkmalen des Oberbegriffs des Anspruchs 1. Ferner betrifft die Erfindung ein Flugzeug mit dem Staufach.

Es sind Gepäckfächer für Flugzeuge bekannt, welche in einem Überkopfbereich einer Passagierkabine von Flugzeugen angeordnet sind und zur Aufnahme von Handgepäckstücken dienen. Derartige Gepäckfächer weisen in der Regel eine absenkbare Schütte zur Aufnahme der Gepäckstücke auf, welche zum Öffnen händisch durch einen Benutzer abgesenkt und zum Schließen angehoben wird. Beim Beladen der Schütte wird das Gesamtgewicht der Schütte erhöht, was insbesondere beim Schließen der Gepäckfächer einen erhöhten Kraftaufwand zur Folge hat. Es sind Kraftunterstützungssysteme bekannt, welche bei Bedarf durch den Benutzer zugeschaltet werden können, um die Schütte mit einem zusätzlichen Schließmoment aus einem Kraftspeicher zu beaufschlagen, sodass der zum Schließen notwendigen Kraftaufwand reduziert wird.

Die Druckschrift EP 3371052 A1 offenbart ein Überkopf-Gepäckfach für ein Flugzeug mit einem oberen Gepäckfachelement, mit einem unteren Gepäckfachelement, welches zwischen einer Schließ- und einer Offenstellung beweglich ist, mit einer Halteeinrichtung zum Halten des unteren Gepäckfachelements in dessen Schließstellung, mit einer Hebefeder zur Unterstützung der Bewegung des unteren Gepäckfachelements aus der Offenstellung in die Schließstellung, und mit einer Rückhalteeinrichtung zur Fixierung der Hebefeder im gespannten Zustand in der Offenstellung des unteren Gepäckfachelementes, wobei ein Betätigungsgriff zur Freigabe der Rückhalteeinrichtung in der Offenstellung des unteren Gepäckfachelementes vorgesehen ist. Das untere Gepäckfachelement ist dabei unabhängig von dessen Beladungszustand, wahlweise mit Unterstützung durch die Hebefeder oder mit im gespannten Zustand fixierter Hebefeder von der Offenstellung in Richtung der Schließstellung beweglich.

Die WO 2016/007915 A1 offenbart ein Staufach für ein Flugzeug mit einem Staufachgehäuse zur Befestigung an einer Flugzeugstruktur. Das Staufach weist weiterhin ein Schwenkfach zur Aufnahme von Staugut auf, welches zwischen einer Offenstellung und einer Schließstellung schwenkbar gelagert ist. Zur Unterstützung der Schließbewegung des Schwenkfachs weist das Staufach eine Kraftunterstützungsvorrichtung in Form einer Spiralfeder auf.

Auch aus den Druckschriften EP 2 995 554 A1, DE 20 2015 102 842 U1 sowie der US 2016/221 511 A1 sind jeweils Staufächer für Fahrzeuge bekannt, die jeweils mit einer Kraftunterstützungsvorrichtung ausgestattet sind, um ein Schwenkfach von einer Offenstellung in eine Schließstellung zu bewegen.

Es ist Aufgabe der vorliegenden Erfindung ein Staufach für ein Flugzeug vorzuschlagen, welches sich durch eine kompakte und kostengünstige Ausgestaltung auszeichnet.

Die Aufgabe wird durch ein Staufach gemäß Anspruch 1 sowie durch ein Flugzeug gemäß Anspruch 13 gelöst. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Gegenstand der Erfindung ist ein Staufach, welches für ein Flugzeug, insbesondere ein Passagierflugzeug, ausgebildet und/oder geeignet ist. Insbesondere ist das Staufach in einem Überkopfbereich einer Flugzeugkabine, vorzugsweise einer Passagierkabine, des Flugzeugs angeordnet und/oder anordenbar. Bevorzugt ist das Staufach als ein Überkopf-Gepäckfach, auch als sogenanntes "OHSC" (Overhead Storage Compartment) bekannt, ausgebildet.

Das Staufach weist ein Staufachgehäuse auf, welches zur Befestigung an einer Flugzeugstruktur ausgebildet und/oder geeignet ist. Insbesondere ist das Staufachgehäuse innerhalb der Flugzeugkabine in dem Überkopfbereich an der Flugzeugstruktur befestigt. Vorzugsweise weist das Staufachgehäuse eine oder mehrere mechanische Schnittstellen zur Befestigung des Staufachgehäuses an der Flugzeugstruktur auf.

Das Staufach weist ein Schwenkfach auf, welches zur Aufnahme von Staugut, insbesondere Gepäckstücke, ausgebildet und/oder geeignet ist. Insbesondere ist das Schwenkfach als eine Schütte, im Speziellen als ein sogenannter "Pivot-Bin", ausgebildet. Das Schwenkfach ist in dem Staufachgehäuse über ein Schwenklager um eine Schwenkachse schwenkbar gelagert. Um die Schwenkachse kann das Schwenkfach dabei in einem Schwenkbereich zwischen einer Offenstellung und einer Schließstellung verschwenkt werden. Insbesondere ist der Schwenkbereich als ein Winkelbereich, von beispielsweise mehr als 45 Grad, vorzugsweise mehr als 65 Grad, im Speziellen mehr als 90 Grad, um die Schwenkachse zu verstehen. In der Offenstellung ist das Staufach geöffnet, sodass eine Be- und eine Entladung des Stauguts möglich ist. In der Schließstellung ist das Staufach hingegen geschlossen bzw. nicht von außen zugänglich.

Ferner weist das Schwenkfach eine Kraftunterstützungsvorrichtung auf. Die Kraftunterstützungsvorrichtung hat insbesondere die Funktion das Schwenkfach bei einem Schließvorgang zu unterstützen und/oder zu entlasten. Hierzu weist die Kraftunterstützungsvorrichtung eine Unterstützungskrafteinheit auf, wobei die Unterstützungskrafteinheit wahlweise in einen Aktivzustand oder einen Passivzustand bringbar ist. Dabei stellt die Unterstützungskrafteinheit in dem Aktivzustand eine in Richtung der Schließstellung wirkende Unterstützungskraft bereit, welche bei einer Schließbewegung des Schwenkfachs von der Offenstellung in Richtung der Schließstellung eine Kraftunterstützung an dem Schwenkfach bewirkt. Insbesondere wirkt die Unterstützungskraft einer auf das Schwenkfach wirkenden Last entgegen. Im Passivzustand hingegen ist die Unterstützungskrafteinheit inaktiv. Dies bedeutet, dass im Passivzustand die Unterstützungskraft gleich Null ist, sodass keine Kraftunterstützung bezüglich des händischen Schließens oder Öffnens des Schwenkfachs erfolgt. Die Unterstützungskrafteinheit stellt in dem Passivzustand keine in Richtung der Schließstellung wirkende Unterstützungskraft bereit. Es wirkt damit keine Unterstützungskraft bei einer Schließbewegung des Schwenkfachs von der Offenstellung in Richtung der Schließstellung. Eine derartige Schließbewegung erfolgt also ohne Kraftunterstützung der Unterstützungskrafteinheit, insbesondere ausschließlich durch Handbetätigung.

Im Rahmen der Erfindung wird vorgeschlagen, dass die Unterstützungskrafteinheit eine Spiralfeder aufweist, welche zur Erzeugung der Unterstützungskraft ausgebildet und/oder geeignet ist. Vorzugsweise bildet die Spiralfeder einen Kraftspeicher, welcher im Aktivzustand der Unterstützungskrafteinheit bei einer Bewegung des Schwenkfachs zu der Schließstellung hin Arbeit in Form der Unterstützungskraft an das Schwenkfach abgibt und bei einer Bewegung des Schwenkfachs zu der Offenstellung hin Arbeit durch eine von außen auf das Schwenkfach wirkende Kraft, z.B. Gewichtskraft des Schwenkfachs und/oder durch den Benutzer aufgebrachte Öffnungskraft, aufnimmt. Insbesondere resultiert aus der Unterstützungskraft ein auf das Schwenkfach wirkendes Unterstützungsmoment um die Schwenkachse.

Die Unterstützungskrafteinheit weist ein Aufnahmegehäuse auf, wobei die Spiralfeder in dem Aufnahmegehäuse aufgenommen, insbesondere aufgewickelt, ist. Das Aufnahmegehäuse ist dabei an dem Staufachgehäuse, insbesondere an einer Seitenwand des Staufachgehäuses angeordnet. Die Spiralfeder weist ein freies Federende auf, wobei das Federende in dem Aktivzustand mit dem Schwenkfach in Wirkverbindung bringbar ist und/oder wirkverbunden ist, um das Schwenkfach mit der Unterstützungskraft zu beaufschlagen. Insbesondere leitet das Federende die Unterstützungskraft an einem Angriffspunkt in das Schwenkfach ein, um das Unterstützungsmoment um die Schwenkachse zu erzeugen. Prinzipiell kann die Unterstützungskraft und/oder das Unterstützungsmoment in dem Aktivzustand konstant sein. Alternativ kann die Unterstützungskraft und/oder das Unterstützungsmoment jedoch auch variabel oder einstellbar sein. Im Speziellen kann die Unterstützungskraft und/oder das Unterstützungsmoment im Aktivzustand vom Schwenkwinkel des Schwenkfachs abhängig sein.

Der Vorteil der Erfindung besteht insbesondere darin, dass durch die Spiralfeder eine rein mechanische Kraftunterstützung vorgeschlagen wird, welche sich durch einen besonders einfachen und kostengünstigen Aufbau auszeichnet. Zudem wird durch die Spiralfeder ein Kraftunterstützungssystem vorgeschlagen, welches besonders robuste und wartungsarme Eigenschaften aufweist. Ein weiterer Vorteil besteht darin, dass durch den Einsatz der Spiralfeder in der Kraftunterstützungsvorrichtung ein besonders kompakter Aufbau und ein geringes Gewicht realisiert werden kann.

In einer konkreten Ausgestaltung ist vorgesehen, dass die Unterstützungskrafteinheit koaxial zu der Schwenkachse angeordnet ist. Insbesondere sind das Aufnahmegehäuse und die Spiralfeder koaxial zu der Schwenkachse angeordnet, wobei die Spiralfeder um die Schwenkachse in dem Aufnahmegehäuse gewickelt ist. Vorzugsweise liegt ein Mittelpunkt der Spiralfeder auf der Schwenkachse. Somit wird eine Unterstützungskrafteinheit vorgeschlagen, welche sich durch eine platzsparende und kompakte Anordnung auszeichnet.

Gemäß der Erfindung ist vorgesehen, dass das Schwenkfach einen Mitnahmeabschnitt aufweist. Insbesondere definiert der Mitnahmeabschnitt den Angriffspunkt an dem das Federende in dem Aktivzustand die Unterstützungskraft einleitet. Bevorzugt ist der Mitnahmeabschnitt als eine seitlich an dem Schwenkfach abstehende Kontur, z.B. ein Steg, ein Bolzen, ein Stift oder dergleichen, ausgebildet. Der Mitnahmeabschnitt kann dabei form-, kraft- und/oder stoffschlüssig mit dem Schwenkfach verbunden sein. Alternativ kann der Mitnahmeabschnitt jedoch auch direkt an das Schwenkfach angeformt, z.B. angespritzt, sein. Der Mitnahmeabschnitt ist somit fest mit dem Schwenkfach verbunden, wobei bei einer Schwenkbewegung des Schwenkfaches der Mitnahmeabschnitt relativ zu dem Staufachgehäuse mitbewegt wird. In dem Aktivzustand ist das Federende an dem Mitnahmeabschnitt abgestützt, um das Schwenkfach über den Mitnahmeabschnitt mit der Unterstützungskraft zu beaufschlagen. Insbesondere dient das Federende zur formschlüssigen Aufnahme des Mitnahmeabschnitts. Hierzu kann das Federende beispielsweise als ein U-förmig oder V-förmig oder L-förmig umgeformtes Ende der Spiralfeder ausgebildet sein.

Das Aufnahmegehäuse weist eine Führungskulisse auf, wobei der Mitnahmeabschnitt in der Führungskulisse zwischen der Offenstellung und der Schließstellung geführt angeordnet ist. Insbesondere weist die Führungskulisse einen um die Schwenkachse gekrümmten Konturverlauf auf. Die Führungskulisse definiert vorzugsweise jeweils in Richtung der Offenstellung und in Richtung der Schließstellung einen Endanschlag für den Mitnahmeabschnitt. Im Speziellen ist der Schwenkbereich durch die Führungskulisse definiert.

In einer weiteren Konkretisierung ist vorgesehen, dass die aktivierte Unterstützungskrafteinheit bei einer Öffnungsbewegung des Schwenkfachs von der Schließstellung in Richtung der Offenstellung von dem Aktivzustand in den Passivzustand bringbar ist. Insbesondere erfolgt die Rückschaltung in den Passivzustand selbsttätig beim Öffnen des Schwenkfachs. Hierzu stellt der Mitnahmeabschnitt das Federende der Spiralfeder bei der Öffnungsbewegung in Richtung der Schließstellung zurück, um die Spiralfeder zu spannen. Im Aktivzustand der Unterstützungskrafteinheit ist die Spiralfeder somit in der Offenstellung des Schwenkfachs vollständig gespannt, also mit mechanischer Energie geladen, und in der Schließstellung zumindest teilweise oder vollständig entspannt. Die Spiralfeder kann somit in einfacher Weise im Aktivzustand durch Öffnen des Schwenkfachs gespannt und somit in den Passivzustand rückgestellt werden.

In einer Weiterbildung ist vorgesehen, dass die Unterstützungskraft zur Umsetzung eines Einklemmschutzes bei einer Bewegung des Federendes in Richtung der Schließstellung hin abnimmt. Insbesondere ändert sich die Unterstützungskraft in Abhängigkeit des zurückgelegten Weges des Federendes, sodass durch die Spiralfeder eine wegabhängige Kraftunterstützung realisiert wird. Bevorzugt endet die Kraftunterstützung vor dem Erreichen der Schließstellung. Insbesondere kann die Spiralfeder derart ausgelegt sein, dass die Unterstützungskraft in der Schließstellung gleich oder zumindest annähernd Null ist.

Alternativ oder optional ergänzend stellt die Spiralfeder zur Umsetzung des Einklemmschutzes die Unterstützungskraft in einem Teilbereich des Schwenkbereichs von der Offenstellung in Richtung der Schließstellung bereit. Insbesondere ist unter einem Teilbereich ein Teil-Winkelbereich des Winkelbereichs zu verstehen. Insbesondere erstreckt sich der Teilbereich ausgehend von der Offenstellung in Richtung der Schließstellung. Der Teilbereich entspricht dabei beispielsweise weniger als 95%, vorzugsweise weniger als 90%, im Speziellen weniger als 85% des gesamten Schwenkbereichs. Bevorzugt ist der Teilbereich konstruktiv begrenzt, sodass das Federende ausschließlich innerhalb des Teilbereichs die Unterstützungskraft in das Schwenkfach, insbesondere den Mitnahmeabschnitt, einleiten kann. Es ist somit eine Überlegung der Erfindung ein Staufach vorzuschlagen, welches einen Einklemmschutz im Aktivzustand der Unterstützungskrafteinheit aufweist, wodurch eine Verletzungsgefahr des Benutzers beim Schließen des Schwenkfachs reduziert wird.

In einer weiteren Konkretisierung ist vorgesehen, dass das Aufnahmegehäuse einen in dem Schwenkbereich angeordneten Federanschlag für das Federende aufweist, welcher den Teilbereich in Richtung der Schließstellung begrenzt. Insbesondere ist der Federanschlag durch eine in dem Aufnahmegehäuse angeordnete Anschlagkontur, z.B. eine Erhebung, ein Steg, eine Nase oder dergleichen, gebildet. Vorzugsweise wird die Unterstützungskraft bei Erreichen des Federendes an der Stelle des Federanschlags in das Aufnahmegehäuse und somit in das Staufachgehäuse eingeleitet. Somit wird bei einer Anlage des Federendes an dem Federanschlag die Übertragung der Unterstützungskraft auf den Mitnahmeabschnitt unterbrochen, sodass die Kraftunterstützung endet. Somit wird eine besonders einfache konstruktive Lösung zur Bildung des Einklemmschutzes vorgeschlagen.

In einer weiteren konstruktiven Realisierung weist das Aufnahmegehäuse einen Lagerabschnitt auf. Insbesondere ist der Lagerabschnitt als ein an dem Aufnahmegehäuse angeordneter, insbesondere zylindrischer, Ansatz ausgebildet. Bevorzugt ist der Lagerabschnitt koaxial zu der Schwenkachse angeordnet. Zudem weist das Schwenkfach einen Gegenlagerabschnitt auf. Prinzipiell kann der Gegenlagerabschnitt als eine den Lagerabschnitt aufnehmende, insbesondere zylindrische, Vertiefung oder Öffnung in dem Schwenkfach ausgebildet sein. Alternativ ist der Gegenlagerabschnitt jedoch durch ein separates Bauteil ausgebildet, welches eine den Lagerabschnitt aufnehmende und/oder komplementäre Geometrie aufweist. Zur Bildung des Schwenklagers sind der Lagerabschnitt und der Gegenlagerabschnitt schwenkbar aneinander abgestützt. Somit wird eine Unterstützungskrafteinheit vorgeschlagen, welche sich zwischen dem Staufachgehäuse und dem Schwenkfach platzsparend anordnen oder nachrüsten lässt.

In einer konkreten Weiterbildung ist vorgesehen, dass die Unterstützungskrafteinheit eine Gleitlagereinrichtung zur Bildung einer Gleitlagerung zwischen dem Lagerabschnitt und dem Gegenlagerabschnitt aufweist. Insbesondere ist die Gleitlagereinrichtung durch einen oder mehrere Gleitlagerringe gebildet. Vorzugsweise ist der Gleitlagerring koaxial und/oder konzentrisch zu dem Lagerabschnitt und/oder dem Gegenlagerabschnitt angeordnet. Beispielsweise kann die Gleitlagereinrichtung wahlweise an dem Lagerabschnitt oder dem Gegenlagerabschnitt vormontiert und/oder festgelegt sein. Somit wird eine Unterstützungskrafteinheit vorgeschlagen, welche sich durch eine verbesserte Lagerung des Schwenkfachs auszeichnet.

In einer weiteren Ausgestaltung ist vorgesehen, dass die Kraftunterstützungsvorrichtung eine Betätigungseinheit aufweist. Insbesondere kann der Benutzer die Unterstützungskrafteinheit durch Betätigung der Betätigungseinheit unabhängig vom Beladungszustand des Schwenkfaches zuschalten, sodass der Schließvorgang des Schwenkfachs wahlweise mit oder ohne Kraftunterstützung umgesetzt wird. Hierzu ist die Unterstützungskrafteinheit bei einer Betätigung der Betätigungseinheit von dem Passivzustand in den Aktivzustand bringbar. Insbesondere wird durch die Betätigungseinheit eine rein mechanische Betätigung der Unterstützungskrafteinheit umgesetzt.

In einer Weiterbildung ist vorgesehen, dass die Betätigungseinheit einen Sperrhebel aufweist. Insbesondere hat der Sperrhebel die Funktion, eine Bewegung der Spiralfeder, insbesondere des Federendes, in dem Passivzustand der Unterstützungskrafteinheit zu hemmen. Vorzugsweise ist durch den Sperrhebel eine Sperrklinke umgesetzt, wobei der Sperrhebel um einen Drehpunkt in oder an dem Aufnahmegehäuse drehbar gelagert ist. Dabei ist der Sperrhebel zwischen einer Sperrstellung und einer Freigabestellung um den Drehpunkt verdrehbar, wobei der Sperrhebel in der Sperrstellung das Federende der Spiralfeder fixiert und in der Freigabestellung das Federende freigibt. Bei Betätigung der Betätigungseinheit wird der Sperrhebel von der Sperrstellung in die Freigabestellung verschwenkt, um die Unterstützungskrafteinheit von dem Passivzustand in den Aktivzustand zu bringen. Dabei ist das Federende in der Freigabestellung freigegeben, sodass die Spiralfeder die Unterstützungskraft auf das Schwenkfach übertragen kann und das Schwenkfach mit Kraftunterstützung geschlossen werden kann. Die Unterstützungskrafteinheit verbleibt dabei solang in dem Aktivzustand, bis das Staufach wieder geöffnet und das Federende durch den Mitnahmeabschnitt zurück in Richtung der Offenstellung mitgenommen wird. Der Sperrhebel weist vorzugsweise eine Sperrkontur, z.B. ein Sperrzahn, auf, welcher mit dem Federende in Eingriff bringbar ist, sodass in der Sperrstellung die Unterstützungskraft über den Sperrhebel in das Aufnahmegehäuse eingeleitet wird. Wird die Betätigungseinheit nicht betätigt, verbleibt der Sperrhebel in der Sperrstellung, sodass die Spiralfeder gespannt bleibt und das Schwenkfach ohne Kraftunterstützung schließbar ist. Durch den Sperrhebel wird ein einfacher und kostengünstiger Betätigungsmechanismus vorgeschlagen, welcher zudem besonders einfach betätigt werden kann.

In einer weiteren konstruktiven Konkretisierung ist vorgesehen, dass die Betätigungseinheit eine Rückstellfeder zur Rückstellung des Sperrhebels von der Freigabestellung in die Sperrstellung aufweist. Insbesondere wird durch die Rückstellfeder eine selbsttätige Rückstellung des Sperrhebels nach dem Auslösen der Unterstützungskrafteinheit umgesetzt. Hierzu wird der Sperrhebel durch die Rückstellfeder mit einer Rückstellkraft beaufschlagt. Insbesondere ist die Rückstellfeder als eine Schenkelfeder ausgebildet. Dabei kann ein erster Schenkel an dem Sperrhebel und ein zweiter Schenkel an dem Aufnahmegehäuse abgestützt sein, um den Sperrhebel in Richtung der Sperrstellung mit der Rückstellkraft zur beaufschlagen. Bei einer Betätigung des Sperrhebels muss somit eine der Rückstellkraft entgegenwirkende Betätigungskraft auf den Sperrhebel aufgebracht werden, um den Betätigungshebel von der Sperrstellung in die Freigabestellung zu überführen. Im Aktivzustand wird das Federende beim Öffnen des Staufachs in Richtung der Offenstellung mitgenommen, wobei bei Erreichen der Sperrkontur der Sperrhebel an der Sperrkontur anläuft, um den Sperrhebel entgegen der Rückstellkraft in Richtung der Freigabestellung zurückzudrücken und anschließend bei Erreichen des Federendes in der Offenstellung in die Sperrstellung zurückschnappt und das Federende fixiert.

In einer konkreten Weiterbildung ist vorgesehen, dass die Betätigungseinheit eine Betätigungseinrichtung aufweist, welche zur Betätigung der Unterstützungskrafteinheit ausgebildet und/oder geeignet ist. Insbesondere dient die Betätigungseinrichtung zur manuellen Betätigung der Unterstützungskrafteinheit. Dabei ist eine Betätigung der Betätigungseinrichtung in der Schließstellung des Schwenkfachs verhindert und in der Offenstellung des Schwenkfachs möglich. Insbesondere ist die Betätigungseinrichtung in der Schließstellung des Schwenkfachs verdeckt und/oder gesperrt und/oder inaktiv, sodass die Betätigungseinrichtung nicht durch den Benutzer betätigt werden kann. Insbesondere ist die Betätigungseinrichtung in der Offenstellung zugänglich und/oder freigegeben und/oder aktiv, sodass die Betätigungseinrichtung durch den Benutzer betätigt werden kann. Bevorzugt ist die Betätigung der Betätigungseinrichtung ausschließlich in der Schließstellung verhindert. Alternativ oder optional ergänzend ist die Betätigung der Betätigungseinrichtung ausschließlich in der Offenstellung möglich. Es kann jedoch auch vorgesehen sein, dass eine Betätigung der Betätigungseinrichtung sowohl in der Offenstellung als auch in einer beliebigen Zwischenstellung des Schwenkfachs zwischen der Offen- und der Schließstellung möglich ist. Somit kann ein versehentliches oder unsachgemäßes Auslösen der Betätigungseinrichtung in der Schließstellung durch den Benutzer vermieden werden und eine Beschädigung oder Fehlfunktion der Kraftunterstützungsvorrichtung verhindert werden.

Optional ergänzend kann vorgesehen sein, dass die Betätigungseinrichtung in Abhängigkeit des Beladungszustandes des Schwenkfachs betätigbar ist. Insbesondere kann die Betätigungseinrichtung erst ausgelöst werden, wenn ein definiertes Beladungsgewicht erreicht bzw. überschritten wird. Hierzu kann eine Vorspannung der Spiralfeder derart ausgelegt sein, dass ein Auslösen des Sperrhebels bei einem leeren Beladungszustand aufgrund der hohen Vorspannung verhindert ist. Durch eine Beladung des Schwenkfachs wirkt die auf das Schwenkfach wirkende Last entgegen der Vorspannung, sodass bei Erreichen des definierten Beladungsgewichts der Sperrhebel ausgelöst werden kann.

In einer weiteren Ausgestaltung ist vorgesehen, dass die Betätigungseinrichtung sperrbar ist. Insbesondere ist die Betätigungseinrichtung zwischen einem Sperrzustand und einem Freigabezustand schaltbar, wobei ein Auslösen der Betätigungseinrichtung in dem Sperrzustand verhindert und/oder gesperrt ist und in dem Freigabezustand möglich und/oder freigegeben ist. Insbesondere kann die Betätigungseinrichtung unabhängig von der Stellung des Schwenkfachs freigegeben oder gesperrt sein. Die Betätigungseinheit weist ein Schlüsselorgan auf, welches zum Entsperren der Betätigungseinrichtung ausgebildet und/oder geeignet ist. Prinzipiell ist das Schlüsselorgan ausgebildet, mittels Berührung und/oder Schlüssel-Schlossprinzip die Betätigungseinrichtung zu entsperren. Alternativ kann das Schlüsselorgan jedoch auch ausgebildet sein, die Betätigungseinrichtung berührungslos zu entsperren. Bevorzugt ist das Schlüsselorgan als ein handgeführtes Schlüsselorgan ausgebildet. Im Speziellen ist das Schlüsselorgan als ein mechanischer und/oder elektrischer und/oder magnetischer Schlüssel ausgebildet ist. Als mechanischer Schlüssel ausgebildet, kann das Schlüsselorgan beispielsweise als ein üblicher Schlüssel ausgebildet sein, welcher zum Entsperren mit einem entsprechenden Schloss der Betätigungseinrichtung interagiert. Alternativ kann der mechanische Schlüssel jedoch auch als ein Sonderwerkzeug mit einer Sondergeometrie ausgebildet sein, welches zum Entsperren mit einer komplementären Gegenschnittstelle der Betätigungseinrichtung interagiert. Als elektrischer und/oder magnetischer Schlüssel ausgebildet, kann das Schlüsselorgan als ein Magnetkartenschlüssel oder RFID-Schlüssel ausgebildet sein, welches zum Entsperren von einem Lesemodul der Betätigungseinrichtung ausgelesen werden kann. Alternativ kann das Schlüsselorgan jedoch auch als ein rein magnetischer Schlüssel ausgebildet sein, welcher zum Entsperren mit einem entsprechenden Magnetschloss der Betätigungseinrichtung interagieren kann. Somit ist ein Auslösen der Betätigungseinrichtung nur in Kombination mit dem entsprechenden Schlüsselorgan möglich, sodass die Bediensicherheit der Betätigungseinrichtung deutlich erhöht ist.

Ein weiterer Gegenstand der Erfindung betrifft ein Flugzeug mit dem Staufach wie dies bereits zuvor beschrieben wurde. Insbesondere ist das Flugzeug als Passagierflugzeug ausgebildet, wobei das Staufach in dem Überkopfbereich der Passagierkabine angeordnet ist und zur Aufnahme von Handgepäck dient.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen:
- Figur 1a, b: eine perspektivische Darstellung eines Staufachs für ein Flugzeug als ein Ausführungsbeispiel der Erfindung;
- Figur 2: eine Explosionsdarstellung einer Unterstützungskrafteinheit einer Kraftunterstützungsvorrichtung des Staufachs aus der Figur 1;
- Figur 3a - 3d: eine axiale Ansicht der Unterstützungskrafteinheit aus der Figur 2 in verschiedenen Betriebszuständen.

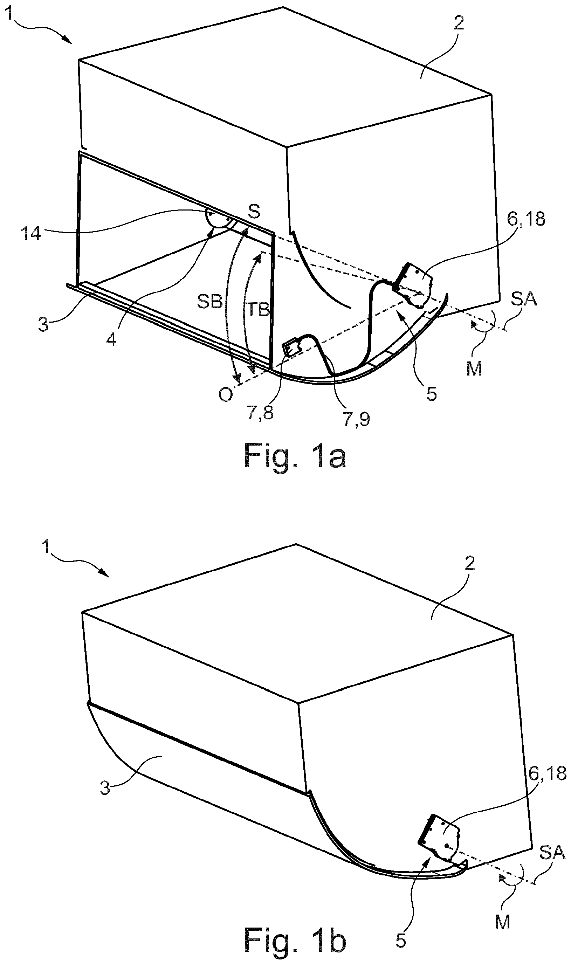

Die Figuren 1a, b zeigen jeweils in einer perspektivischen Darstellung ein Staufach 1, welches zur Anordnung in einem Überkopfbereich einer Passagierkabine eines Flugzeugs, insbesondere eines Passagierflugzeugs, dient. Das Staufach 1 weist ein Staufachgehäuse 2, hier nur als eine seitliche Wandung dargestellt, sowie ein in dem Staufachgehäuse 2 um eine Schwenkachse SA schwenkbar gelagertes Schwenkfach 3 auf. Das Staufachgehäuse 2 ist an einer Flugzeugstruktur des Flugzeugs montierbar. Das Schwenkfach 3 ist als eine Schütte ausgebildet und dient zur Aufnahme von Staugut, wie z.B. Handgepäckstücke.

Das Schwenkfach 3 ist beidseitig über jeweils ein Schwenklager 4 an dem Staufachgehäuse 2 gelagert, wobei das Schwenkfach 3 relativ zu dem Staufachgehäuse 2 über das Schwenklager 4 in einem Schwenkbereich SB zwischen einer Offenstellung O und einer Schließstellung S verschwenkbar ist. In der Offenstellung O, wie in Figur 1a gezeigt, ist das Schwenkfach 3 zum Einlegen oder Entnehmen des Stauguts zugänglich. In der Schließstellung S, wie in Figur 1b gezeigt, ist das Schwenkfach 3 in das Staufachgehäuse 2 eingeschwenkt, sodass ein Zugang zu dem Schwenkfach 3 blockiert ist.

Im beladenen Zustand des Schwenkfaches 3 können große Handkräfte notwendig sein, um das Schwenkfach 3 von der Offenstellung O in die Schließstellung S zu bewegen. Aus dem Stand der Technik sind diverse vollautomatische Lösungen bekannt, welche beispielsweise mit einem Elektromotor eine zusätzliche Kraft in Richtung der Schließstellung erzeugen, um den Schließvorgang zu unterstützen. Der Nachteil hierbei sind insbesondere hohe Kosten, ein hohes Gewicht sowie der elektrische Leistungsbedarf. Des Weiteren sind kraftunterstützende Systeme bekannt, welche auf einer elektronischen Wiegeeinheit und der elektrischen Zuschaltung eines mechanischen Kraftspeichers beruhen. Der Nachteil hierbei sind wiederum hohe Kosten, der Aufwand für die elektrische Versorgung sowie die Gefahr einer Fehlauslösung.

Es wird somit eine Kraftunterstützungsvorrichtung 5 vorgeschlagen, welche dazu ausgebildet ist, eine rein mechanische Kraftunterstützung für das absenkbare Schwenkfach 3 bereitzustellen. Die Kraftunterstützungsvorrichtung 5 weist eine mechanische Unterstützungskrafteinheit 6 auf, welche ausgebildet ist, zur Kraftunterstützung eine Unterstützungskraft auf das Schwenkfach 3 zu übertragen. Die Unterstützungskrafteinheit 6 ist hierzu koaxial zu der Schwenkachse SA zwischen dem Staufachgehäuse 2 und dem Schwenkfach 3 angeordnet. Dabei kann die Unterstützungskrafteinheit 5 nur einseitig angeordnet sein. Optional kann jedoch auch eine weitere Unterstützungskrafteinheit 5 auf der gegenüberliegenden Seite vorgesehen sein.

Die Unterstützungskrafteinheit 6 ist wahlweise zwischen einem Aktivzustand und einem Passivzustand schaltbar. In dem Aktivzustand stellt die Unterstützungskrafteinheit 6 die Unterstützungskraft bereit, wobei aus der Unterstützungskraft ein Unterstützungsmoment M um die Schwenkachse SA resultiert, welches einer auf das Schwenkfach 3 wirkenden Last in zumindest einem Teilbereich TB des Schwenkbereichs SB entgegenwirkt. Somit wird eine zum Schließen des Schwenkfachs 3 benötigte Handkraft eines Benutzers reduziert. In dem Passivzustand stellt die Unterstützungskrafteinheit 6 keine Unterstützungskraft bereit, sodass das Schwenkfach 3 ausschließlich durch die Handkraft aus der Offenstellung O in die Schließstellung S verschwenkt werden muss.

Die Kraftunterstützungsvorrichtung 5 weist eine Betätigungseinheit 7 zur Betätigung der Unterstützungskrafteinheit 6 auf, wobei bei einer Betätigung der Betätigungseinheit 7 die Unterstützungskrafteinheit 6 von dem Passivzustand in den Aktivzustand geschaltet wird. Die Betätigungseinheit 7 weist hierzu eine Betätigungseinrichtung 8 auf, welche über einen Seilzug 9, z.B. ein Bowdenzug, mit der Unterstützungskrafteinheit 6 in Wirkverbindung steht. Die Betätigungseinrichtung 8 ist beispielsweise als ein seitlich an dem Schwenkfach 3 angeordneter Auslösegriff oder Druckknopf ausgebildet, welcher bei Bedarf manuell durch den Benutzer ausgelöst werden kann. Beispielsweise kann die Unterstützungskrafteinheit 6 ausgelöst werden, wenn der Benutzer vermutet, dass die auf das Schwenkfach 3 wirkende Last zu groß ist. Beispielsweise kann der Benutzer durch kurzes Anheben des Schwenkfachs 3 das Gewicht abschätzen.

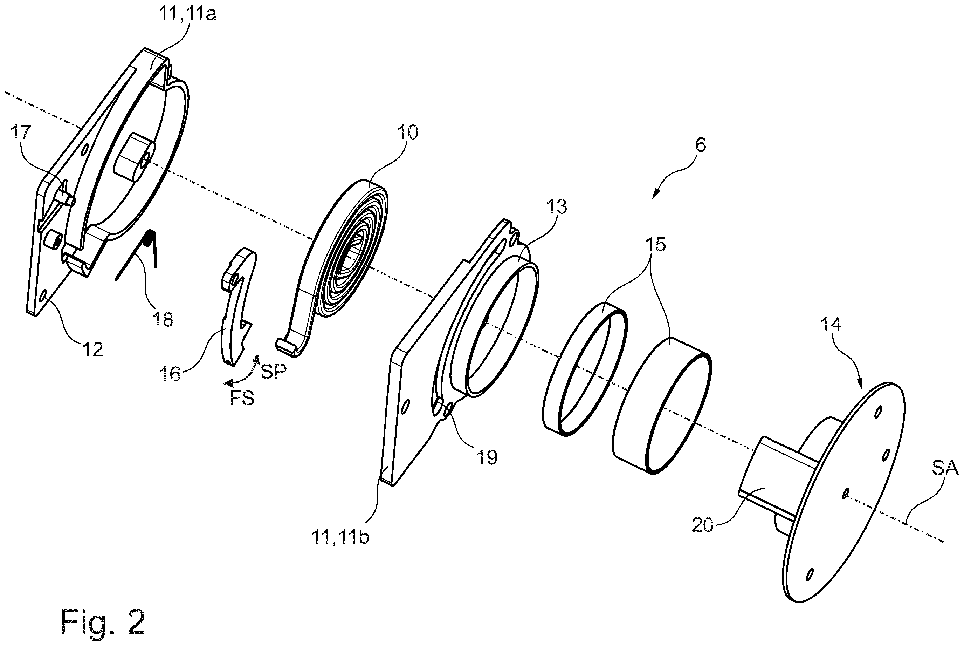

Figur 2 zeigt die Unterstützungskrafteinheit 6 in einer Explosionsdarstellung als ein Ausführungsbeispiel der Erfindung. Die Unterstützungskrafteinheit 6 weist zur Erzeugung der Unterstützungskraft eine Spiralfeder 10 auf, welche koaxial zu der Schwenkachse SA in einem Aufnahmegehäuse 11 aufgenommen ist. Dabei liegt ein Mittelpunkt der Spiralfeder 10 auf der Schwenkachse S, wobei die Spiralfeder 10 um die Schwenkachse SA in dem Aufnahmegehäuse 11 aufgewickelt ist. Das Aufnahmegehäuse 11 ist zweiteilig ausgebildet, wobei die Spiralfeder 10 in Bezug auf die Schwenkachse SA axial zwischen einem ersten und einem zweiten Gehäusebauteil 11a, b verliersicher aufgenommen ist. Die beiden Gehäusebauteile 11a, b können beispielsweise lösbar, z.B. über eine Schraubenverbindung, miteinander verbunden sein.

Das erste Gehäusebauteil 11a weist mehrere Befestigungsmittelaufnahmen 12 auf, welche zur Aufnahme von Befestigungsmitteln, nicht dargestellt, dienen. Das Aufnahmegehäuse 11 kann dabei über die Befestigungsmittel koaxial zu der Schwenkachse SA an einer Seitenwand des Staufachgehäuses 2 befestigt sein. Das zweite Gehäusebauteil 11b weist einen Lagerabschnitt 13 zur Lagerung des Schwenkfachs 3 auf, wobei das Schwenkfach 3 zur Aufnahme des Lagerabschnitts 13 wiederum über einen an dem Schwenkfach 3 befestigten Gegenlagerabschnitt 14 an dem Lagerabschnitt 13 drehbar abgestützt ist. In einer Einbausituation sind der Lagerabschnitt 13 und der Gegenlagerabschnitt 14 zur Bildung des Schwenklagers 4 drehbar ineinander aufgenommen. Der Lagerabschnitt 13 ist hierzu als ein koaxial zur Schwenkachse SA zylindrischer Ansatz ausgebildet, welcher an das zweite Gehäusebauteil 11b angeformt ist. Die Gegenlagerabschnitt 14 ist als ein weiterer koaxial zur Schwenkachse SA zylindrischer Ansatz ausgebildet, welcher zu dem Lagerabschnitt 13 komplementär ausgebildet ist.

Die Unterstützungskrafteinheit 6 weist zudem eine Gleitlagereinrichtung 15 auf, wobei der Lagerabschnitt 13 und der Gegenlagerabschnitt 14 über die Gleitlagereinrichtung 15 relativ zueinander gleitgelagert sind. Die Gleitlagereinrichtung 15 ist beispielsweise durch ein oder mehrere Gleitlagerringe gebildet, welche form- und/oder kraftschlüssig an dem Lagerabschnitt 13 und/oder dem Gegenlagerabschnitt 14 angeordnet sind bzw. festgelegt sind. Beispielsweise kann die Gleitlagereinrichtung 15 wahlweise auf den Lagerabschnitt 13 oder den Gegenlagerabschnitt 14 aufgepresst sein.

Die Betätigungseinheit 7 weist einen in dem Aufnahmegehäuse 11 drehbar gelagerten Sperrhebel 16 auf, welcher im Passivzustand der Unterstützungskrafteinheit 11 die Spiralfeder 10 sperrt und im Aktivzustand die Spiralfeder 10 zur Übertragung der Unterstützungskraft auf das Schwenkfach 3 freigibt. Der Sperrhebel 16 ist hierzu in der Art einer Sperrklinke ausgebildet, wobei der Sperrhebel 16 um einen an dem ersten Gehäusebauteil 11a angeordneten Bolzenabschnitt 17 drehbar zwischen einer Freigabestellung FS und einer Sperrstellung SP gelagert ist. Der Sperrhebel 16 ist dabei über den Seilzug 9 mit der Betätigungseinrichtung 8 verbunden, wobei der Sperrhebel 16 beim Auslösen der Betätigungseinrichtung 8 über den Seilzug 9 in Richtung der Freigabestellung FS mit einer Betätigungskraft beaufschlagt wird, sodass der Sperrhebel 16 von der Sperrstellung SP in die Freigabestellung FS verschwenkt wird.

Zudem weist die Betätigungseinheit 7 eine Rückstellfeder 18 auf, welche den Sperrhebel 16 in Richtung der Sperrstellung SP mit einer Rückstellkraft beaufschlagt. Die Rückstellfeder 18 hat dabei die Funktion, den Sperrhebel 16 nach Betätigung durch der Betätigungseinrichtung 8 selbsttätig in die Sperrstellung SP zurückzustellen. Die Rückstellfeder 18 ist beispielsweise als eine Schenkelfeder ausgebildet, welche auf dem Bolzenabschnitt 17 aufgenommen sich einerseits an dem Aufnahmegehäuse 11 und andererseits an dem Sperrhebel 16 abstützt.

Wie in Figur 2 dargestellt weist das zweite Gehäusebauteil 11b eine Führungskulisse 19 auf, wobei in der Führungskulisse 19 ein mit dem Gegenlagerabschnitt 14 verbundener Mitnahmeabschnitt 20 geführt aufgenommen ist. Der Mitnahmeabschnitt 20 ist beispielsweise als ein an den Gegenlagerabschnitt 14 angeformter Steg ausgebildet ist, welche in axialer Richtung in Bezug auf die Schwenkachse SA ausgerichtet ist.

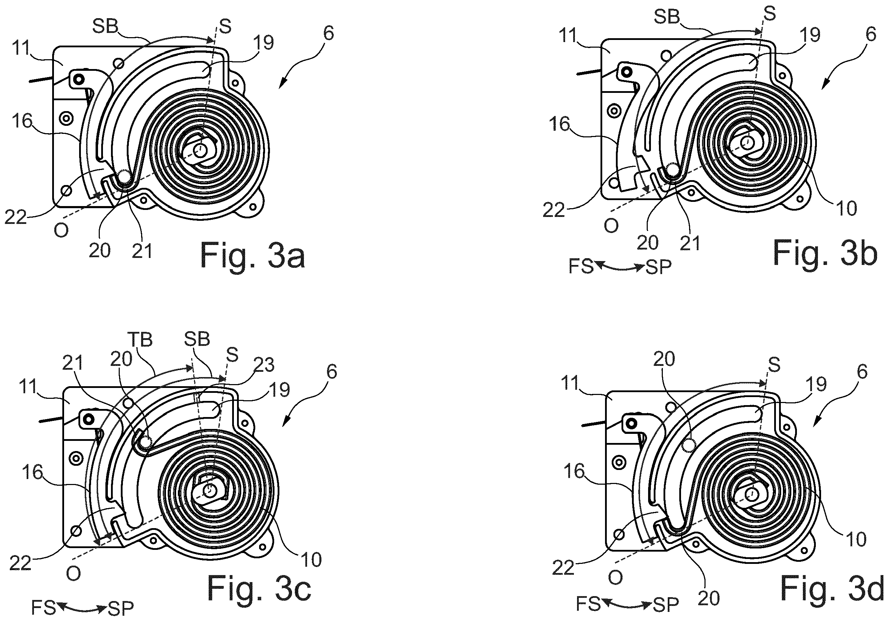

Die Figuren 3a bis 3d zeigen jeweils in einer axialen Ansicht in Bezug auf die Schwenkachse SA die Unterstützungskrafteinheit 6 in unterschiedlichen Betriebszuständen. Die Spiralfeder 10 weist ein Federende 21 auf, wobei das Federende 21 in dem Aktivzustand der Unterstützungskrafteinheit 6 in Richtung der Sperrstellung S an dem Mitnahmeabschnitt 20, hier nur schematisch angedeutet, anliegt, um die Unterstützungskraft über den Mitnahmeabschnitt 20 auf das Schwenkfach 3 zu übertragen. Das Federende 21 ist beispielsweise U-förmig umgeformt, sodass der Mitnahmeabschnitt 20 in Richtung der Schließstellung S formschlüssig durch das Federende 21 aufgenommen werden kann. Der Sperrhebel 16 weist eine Sperrkontur 22 auf, wobei die Sperrkontur 22 in dem Passivzustand das Federende 21 der Spiralfeder 10 in der Offenstellung O fixiert. Beispielsweise ist die Sperrkontur 22 als ein in Richtung der Sperrstellung SP gerichteter Sperrzahn ausgebildet, welcher mit dem Federende 21 in Eingriff steht oder bringbar ist.

Figur 3a zeigt die Unterstützungskrafteinheit 6 in dem Passivzustand, wobei das Schwenkfach 3 in der Offenstellung O angeordnet ist. Dabei sind der Mitnahmeabschnitt 20 und das Federende 21 in der Offenstellung O angeordnet, wobei der Sperrhebel 16 in der Sperrstellung SP angeordnet ist und das Federende 21 durch die Sperrkontur 22 fixiert. Somit wird die Unterstützungskraft direkt in den Sperrhebel 16 und somit in das Aufnahmegehäuse 11 eingeleitet, sodass das Schwenkfach 3 in Richtung der Schließstellung S ohne Kraftunterstützung bewegt werden kann.

Figur 3b zeigt die Unterstützungskrafteinheit 6 in dem Aktivzustand, wobei das Schwenkfach 3 und somit der Mitnahmeabschnitt 20 und das Federende 21 weiterhin in der Offenstellung O angeordnet sind. Zum Schalten des Aktivzustands, wird der Sperrhebel 16 durch Auslösen der Betätigungseinrichtung 8 durch den Benutzer, z.B. Crew oder Passagier, von der Sperrstellung SP in die Freigabestellung FS verschwenkt. In der Freigabestellung FS ist das Federende 21 somit freigegeben, sodass die Unterstützungskraft über das Federende 21 in den Mitnahmeabschnitt 20 eingeleitet und das Unterstützungsmoment M auf das Schwenkfach 3 übertragen wird. Somit kann das Schwenkfach 3 in Richtung der Schließstellung S mittels Kraftunterstützung bewegt werden. Dabei überträgt die Spiralfeder 10 die Unterstützungskraft auf den Mitnahmeabschnitt 20, wobei das Federende 21 den Mitnahmeabschnitt 20 um die Schwenkachse SA in Richtung der Schließstellung mitnimmt. Der Sperrhebel 16 wird dabei zugleich durch die Rückstellfeder 18 in die Sperrstellung SP zurückgestellt.

Figur 3c zeigt die Unterstützungskrafteinheit 6 in dem Aktivzustand, wobei das Schwenkfach 3 und somit der Mitnahmeabschnitt 20 und das Federende 21 in Richtung der Schließstellung S in dem Schwenkbereich SB verschwenkt ist. Dabei überträgt die Spiralfeder 10 die Unterstützungskraft innerhalb des Teilbereichs TB auf das Schwenkfach 3, wobei der Teilbereich TB durch einen Federanschlag 23 kurz vor der Schließstellung S begrenzt ist. Bei Erreichen des Federanschlags 23 liegt das Federende 21 somit an dem Federanschlag 23 an, sodass die Unterstützungskraft über den Federanschlag 23 in das Aufnahmegehäuse 11 eingeleitet wird. Somit wird in dem Schwenkbereich SB zwischen dem Federanschlag 23 und der Schließstellung S keine Unterstützungskraft auf den Mitnahmeabschnitt 20 übertragen, sodass eine weitere Schließbewegung in die Schließstellung S ausschließlich durch die Handkraft des Benutzers erfolgt. Dadurch wird ein Einklemmschutz realisiert, welcher ein ungewolltes Schließen des Schwenkfachs 3 verhindert. Alternativ kann anstelle des Federanschlags 23 durch eine Federauslegung der Spiralfeder 10 eine wegabhängige Kraftunterstützung zur Umsetzung des Einklemmschutzes umgesetzt werden, wobei die Spiralfeder 10 derart ausgelegt sein kann, sodass die Unterstützungskraft in Richtung der Schließstellung S hin abnimmt.

Beim Öffnen des Schwenkfachs 3 von der Schließstellung S in die Offenstellung O wird das Federende 21 der Spiralfeder 10 durch den Mitnahmeabschnitt 20 in Richtung der Offenstellung O mitgenommen, sodass die Spiralfeder 10 wieder gespannt und die Energie zurückgespeichert wird. Bei Erreichen der Offenstellung wird das Federende 21 wieder durch die Sperrkontur 22 des Sperrhebels 16 verriegelt, sodass die Spiralfeder 10 in dieser Position bis zur nächsten Betätigung der Betätigungseinrichtung 8 verbleibt.

Figur 3d zeigt die Unterstützungskrafteinheit 6 in dem Passivzustand, wobei das Schwenkfach 3 und somit der Mitnahmeabschnitt 20 in Richtung der Schließstellung S innerhalb des Schwenkbereichs S verschwenkt ist. Beispielsweise kann zum Schließen eines unbeladenen Staufaches 1 darauf verzichtet werden, die Spiralfeder 10 freizugeben, sodass die Unterstützungskrafteinheit 6 während der Schließbewegung des Schwenkfachs 3 in dem Passivzustand verbleibt und somit keine Kraftunterstützung durch die Spiralfeder 10 erfolgt. Das Schwenkfach 3 wird somit ausschließlich per Handkraft in die Schließstellung S geführt, wobei der Mitnahmeabschnitt 20 ohne Abstützung des Federendes 21 in der Führungskulisse 19 geführt wird.

Es wird somit eine rein mechanische Kraftunterstützungsvorrichtung 5 mit der Option einer manuellen Zuschaltung vorgeschlagen. Die Kraftunterstützungsvorrichtung 5 zeichnet sich dabei durch ein geringeres Gewicht und geringere Kosten aus. Zudem wird durch die Anordnung der Spiralfeder 10 koaxial zur Schwenkachse SA eine kompakte und zuverlässige Kraftunterstützungsvorrichtung 5 realisiert. Weiterhin kann durch die Spiralfeder 10 eine Kraftunterstützung geschaffen werden, welche individuell hinsichtlich der Unterstützungskraft ausgelegt werden kann.

### Bezugszeichenliste

- 1: Staufach
- 2: Staufachgehäuse
- 3: Schwenkfach
- 4: Schwenklager
- 5: Kraftunterstützungsvorrichtung
- 6: Unterstützungskrafteinheit
- 7: Betätigungseinheit
- 8: Betätigungseinrichtung
- 9: Seilzug
- 10: Spiralfeder
- 11: Aufnahmegehäuse
- 11a, b: Gehäusebauteile
- 12: Befestigungsmittelaufnahmen
- 13: Lagerabschnitt
- 14: Gegenlagerabschnitt
- 15: Gleitlagereinrichtung
- 16: Sperrhebel
- 17: Bolzenabschnitt
- 18: Rückstellfeder
- 19: Führungskulisse
- 20: Mitnahmeabschnitt
- 21: Federende
- 22: Sperrkontur
- 23: Federanschlag
- M: Unterstützungsmoment
- O: Offenstellung
- S: Schließstellung
- FS: Freigabestellung
- SP: Sperrstellung
- SA: Schwenkachse
- SB: Schwenkbereich
- TB: Teilbereich

## Patentansprüche

1. Staufach (1) für ein Flugzeug,
mit einem Staufachgehäuse (2) zur Befestigung an einer Flugzeugstruktur,
mit einem Schwenkfach (3) zur Aufnahme von Staugut,
wobei das Schwenkfach (3) in dem Staufachgehäuse (2) über ein Schwenklager (4) in einem Schwenkbereich (SB) um eine Schwenkachse (SA) zwischen einer Offenstellung (O) und einer Schließstellung (S) schwenkbar gelagert ist,
mit einer Kraftunterstützungsvorrichtung (5),
wobei die Kraftunterstützungsvorrichtung (5) eine Unterstützungskrafteinheit (6) aufweist, wobei die Unterstützungskrafteinheit (6) wahlweise in einen Aktivzustand oder einen Passivzustand bringbar ist, wobei die Unterstützungskrafteinheit (6) in dem Aktivzustand eine in Richtung der Schließstellung (S) wirkende Unterstützungskraft bereitstellt, wobei die Unterstützungskraft bei einer Schließbewegung des Schwenkfachs (3) von der Offenstellung (O) in Richtung der Schließstellung (S) eine Kraftunterstützung an dem Schwenkfach (3) bewirkt,
wobei die Unterstützungskrafteinheit (6) eine Spiralfeder (10) zur Erzeugung der Unterstützungskraft aufweist, wobei die Spiralfeder (10) in einem an dem Staufachgehäuse (2) angeordneten Aufnahmegehäuse (11) aufgenommen ist, wobei ein Federende (21) der Spiralfeder (10) in dem Aktivzustand mit dem Schwenkfach (3) in Wirkverbindung bringbar ist, um das Schwenkfach (3) mit der Unterstützungskraft zu beaufschlagen,
**dadurch gekennzeichnet, dass**
das Schwenkfach (3) einen Mitnahmeabschnitt (20) und dass das Aufnahmegehäuse (11) eine Führungskulisse (19) aufweist, wobei der Mitnahmeabschnitt (20) relativ zu dem Aufnahmegehäuse (11) in der Führungskulisse (19) zwischen der Offenstellung (O) und der Schließstellung (S) geführt angeordnet ist, wobei in dem Aktivzustand das Federende (21) an dem Mitnahmeabschnitt (20) abgestützt ist, um das Schwenkfach (3) über den Mitnahmeabschnitt (20) mit der Unterstützungskraft zu beaufschlagen.

2. Staufach (1) nach Anspruch 1, **dadurch gekennzeichnet, dass** die Unterstützungskrafteinheit (6) koaxial zu der Schwenkachse (SA) angeordnet ist, wobei die Spiralfeder (11) um die Schwenkachse (SA) in dem Aufnahmegehäuse (11) aufgewickelt ist.

3. Staufach (1) nach Anspruch 1 oder 2, **dadurch gekennzeichnet, dass** die aktivierte Unterstützungskrafteinheit (6) bei der Schließbewegung des Schwenkfachs (3) über den Mitnahmeabschnitt (20) von dem Aktivzustand in den Passivzustand bringbar ist, wobei der Mitnahmeabschnitt (20) bei der Schließbewegung das Federende (21) in Richtung der Schließstellung (S) zurückstellt, um die Spiralfeder (11) zu spannen.

4. Staufach (1) nach einem der vorhergehenden Ansprüche, **dadurch gekennzeichnet, dass** zur Umsetzung eines Einklemmschutzes die Unterstützungskraft bei einer Bewegung des Federendes (21) in Richtung der Schließstellung (S) hin abnimmt und/oder dass die Spiralfeder (10) die Unterstützungskraft in einem Teilbereich (TB) des Schwenkbereichs (SB) bereitstellt.

5. Staufach (1) nach Anspruch 4, **dadurch gekennzeichnet, dass** das Aufnahmegehäuse (11) einen in dem Schwenkbereich (SB) angeordneten Federanschlag (23) für das Federende (21) aufweist, wobei der Federanschlag (23) den Teilbereich (TB) des Schwenkbereichs (SB) begrenzt.

6. Staufach (1) nach einem der vorhergehenden Ansprüche, **dadurch gekennzeichnet, dass** das Aufnahmegehäuse (11) einen Lagerabschnitt (13) aufweist und dass das Schwenkfach (3) eine Gegenlagerabschnitt (14) aufweist, wobei der Lagerabschnitt (13) und der Gegenlagerabschnitt (14) zur Bildung des Schwenklagers (4) schwenkbar aneinander abgestützt sind.

7. Staufach (1) nach Anspruch 6, **dadurch gekennzeichnet, dass** die Unterstützungskrafteinheit (6) eine Gleitlagereinrichtung (15) aufweist, wobei der Lagerabschnitt (13) und der Gegenlagerabschnitt (14) über die Gleitlagereinrichtung (15) gleitgelagert sind.

8. Staufach (1) nach einem der vorhergehenden Ansprüche, **dadurch gekennzeichnet, dass** die Kraftunterstützungsvorrichtung (5) eine Betätigungseinheit (7) aufweist, wobei die Unterstützungskrafteinheit (6) bei einer Betätigung der Betätigungseinheit (7) von dem Passivzustand in den Aktivzustand bringbar ist.

9. Staufach (1) nach Anspruch 8, **dadurch gekennzeichnet, dass** die Betätigungseinheit (7) einen zwischen einer Sperrstellung (SP) und einer Freigabestellung (FS) verschwenkbaren Sperrhebel (16) aufweist, wobei der Sperrhebel (16) in der Sperrstellung (SP) das Federende (21) fixiert und in der Freigabestellung (FS) das Federende (21) freigibt, wobei der Sperrhebel (16) bei Betätigung der Betätigungseinheit (7) von der Sperrstellung (SP) in die Freigabestellung (FS) verschwenkt wird, um die Unterstützungskrafteinheit (6) von dem Passivzustand in den Aktivzustand zu bringen.

10. Staufach (1) nach Anspruch 9, **dadurch gekennzeichnet, dass** die Betätigungseinheit (7) eine Rückstellfeder (18) aufweist, wobei die Rückstellfeder (18) den Sperrhebel (16) zur Rückstellung von der Freigabestellung (FS) in die Sperrstellung (SP) mit einer Rückstellkraft beaufschlagt.

11. Staufach (1) nach einem der Ansprüche 8 bis 10, **dadurch gekennzeichnet, dass** die Betätigungseinheit (7) eine Betätigungseinrichtung (8) zur Betätigung der Unterstützungskrafteinheit (6) aufweist, um die Unterstützungskrafteinheit (6) von dem Passivzustand in den Aktivzustand zu schalten, wobei eine Betätigung der Betätigungseinrichtung (8) in der Schließstellung (S) des Schwenkfachs (3) verhindert und in der Offenstellung (O) des Schwenkfachs (3) möglich ist.

12. Staufach (1) nach Anspruch 11, **dadurch gekennzeichnet, dass** die Betätigungseinrichtung (8) sperrbar ist, wobei die Betätigungseinheit (8) ein Schlüsselorgan zum Entsperren der Betätigungseinrichtung (8) aufweist.

13. Flugzeug mit dem Staufach (1) nach einem der vorhergehenden Ansprüche.

## Claims

1. Storage compartment (1) for an aircraft,
with a storage compartment housing (2) for fastening to an aircraft structure,
with a swivelling compartment (3) for receiving storage items,
the swivelling compartment (3) being mounted in the storage compartment housing (2) via a swivel bearing (4) such that it can be swivelled in a swivelling range (SB) about a swivelling axis (SA) between an open position (O) and a closed position (S),
with a force assistance apparatus (5),
the force assistance apparatus (5) having an assistance force unit (6), it being possible for the assistance force unit (6) to be moved selectively into an active state or a passive state, the assistance force unit (6) providing, in the active state, an assistance force which acts in the direction of the closed position (S), the assistance force bringing about a force assistance on the swivelling compartment (3) in the case of a closing movement of the swivelling compartment (3) from the open position (O) in the direction of the closed position (S),
the assistance force unit (6) having a spiral spring (10) for generating the assistance force, the spiral spring (10) being received in a receiving housing (11) which is arranged on the storage compartment housing (2), it being possible for one spring end (21) of the spiral spring (10) to be moved into an operative connection with the swivelling compartment (3) in the active state, in order to load the swivelling compartment (3) with the assistance force,
**characterized in that**
the swivelling compartment (3) has a driving section (20), and **in that** the receiving housing (11) has a slotted guide (19), the driving section (20) being arranged such that it is guided relative to the receiving housing (11) in the slotted guide (19) between the open position (O) and the closed position (S), the spring end (21) being supported on the driving section (20) in the active state, in order to load the swivelling compartment (3) with the assistance force via the driving section (20).

2. Storage compartment (1) according to Claim 1, **characterized in that** the assistance force unit (6) is arranged coaxially with respect to the swivelling axis (SA), the spiral spring (11) being wound about the swivelling axis (SA) in the receiving housing (11).

3. Storage compartment (1) according to Claim 1 or 2, **characterized in that** the activated assistance force unit (6) can be moved via the driving section (20) from the active state into the passive state in the case of the closing movement of the swivelling compartment (3), the driving section (20) restoring the spring end (21) in the direction of the closed position (S) in the case of the closing movement, in order to tension the spiral spring (11) .

4. Storage compartment (1) according to one of the preceding claims, **characterized in that**, in order to implement an anti-pinch protection means, the assistance force decreases in the direction of the closed position (S) in the case of a movement of the spring end (21), and/or **in that** the spiral spring (10) provides the assistance force in a part range (TB) of the swivelling range (SB).

5. Storage compartment (1) according to Claim 4, **characterized in that** the receiving housing (11) has a spring stop (23) for the spring end (21), which spring stop (23) is arranged in the swivelling range (SB), the spring stop (23) limiting the part range (TB) of the swivelling range (SB).

6. Storage compartment (1) according to one of the preceding claims, **characterized in that** the receiving housing (11) has a bearing section (13), and **in that** the swivelling compartment (3) has a counter-bearing section (14), the bearing section (13) and the counter-bearing section (14) being supported on one another such that they can be swivelled in order to form the swivel bearing (4) .

7. Storage compartment (1) according to Claim 6, **characterized in that** the assistance force unit (6) has a plain bearing device (15), the bearing section (13) and the counter-bearing section (14) being mounted slidingly via the plain bearing device (15).

8. Storage compartment (1) according to one of the preceding claims, **characterized in that** the force assistance apparatus (5) has an actuating unit (7), it being possible for the assistance force unit (6) to be moved from the passive state into the active state in the case of an actuation of the actuating unit (7).

9. Storage compartment (1) according to Claim 8, **characterized in that** the actuating unit (7) has a locking lever (16) which can be pivoted between a locked position (SP) and a released position (FS), the locking lever (16) fixing the spring end (21) in the locked position (SP) and releasing the spring end (21) in the released position (FS), the locking lever (16) being pivoted from the locked position (SP) into the released position (FS) in the case of actuation of the actuating unit (7), in order to move the assistance force unit (6) from the passive state into the active state.

10. Storage compartment (1) according to Claim 9, **characterized in that** the actuating unit (7) has a restoring spring (18), the restoring spring (18) loading the locking lever (16) with a restoring force for restoring from the released position (FS) into the locked position (SP).

11. Storage compartment (1) according to one of Claims 8 to 10, **characterized in that** the actuating unit (7) has an actuating device (8) for actuating the assistance force unit (6), in order to switch the assistance force unit (6) from the passive state into the active state, an actuation of the actuating device (8) being prevented in the closed position (S) of the swivelling compartment (3) and being possible in the open position (O) of the swivelling compartment (3).

12. Storage compartment (1) according to Claim 11, **characterized in that** the actuating device (8) can be locked, the actuating unit (8) having a key member for unlocking the actuating device (8).

13. Aircraft with the storage compartment (1) according to one of the preceding claims.

## Revendications

1. Compartiment de rangement (1) pour un avion,
muni d'un boîtier de compartiment de rangement (2) pour la fixation à une structure de l'avion,
muni d'un compartiment pivotant (3) pour la réception d'articles à ranger,
le compartiment pivotant (3) étant monté de manière pivotante dans le boîtier de compartiment de rangement (2) par l'intermédiaire d'un palier de pivotement (4) dans une zone de pivotement (SB) autour d'un axe de pivotement (SA) entre une position d'ouverture (O) et une position de fermeture (S),
muni d'un dispositif d'assistance de force (5),
le dispositif d'assistance de force (5) comprenant une unité de force d'assistance (6), l'unité de force d'assistance (6) pouvant être amenée au choix dans un état actif ou dans un état passif, l'unité de force d'assistance (6) dans l'état actif fournissant une force d'assistance agissant en direction de la position de fermeture (S), la force d'assistance produisant une assistance de force sur le compartiment pivotant (3) lors d'un mouvement de fermeture du compartiment pivotant (3) de la position d'ouverture (O) en direction de la position de fermeture (S),
l'unité de force d'assistance (6) comprenant un ressort spiral (10) pour la génération de la force d'assistance, le ressort spiral (10) étant reçu dans un boîtier de réception (11) agencé sur le boîtier de compartiment de rangement (2), une extrémité de ressort (21) du ressort spiral (10) pouvant dans l'état actif être amené en liaison fonctionnelle avec le compartiment pivotant (3), afin de solliciter le compartiment pivotant (3) avec la force d'assistance, **caractérisé en ce que**
le compartiment pivotant (3) comprend une section d'entraînement (20) et **en ce que** le boîtier de réception (11) comprend une coulisse de guidage (19), la section d'entraînement (20) étant agencée de manière guidée par rapport au boîtier de réception (11) dans la coulisse de guidage (19) entre la position d'ouverture (O) et la position de fermeture (S) ; dans l'état actif, l'extrémité de ressort (21) s'appuyant sur la section d'entraînement (20), afin de solliciter le compartiment pivotant (3) par l'intermédiaire de la section d'entraînement (20) avec la force d'assistance.

2. Compartiment de rangement (1) selon la revendication 1, **caractérisé en ce que** l'unité de force d'assistance (6) est agencée coaxialement à l'axe de pivotement (SA), le ressort spiral (11) étant enroulé autour de l'axe de pivotement (SA) dans le boîtier de réception (11).

3. Compartiment de rangement (1) selon la revendication 1 ou 2, **caractérisé en ce que** l'unité de force d'assistance activée (6) peut être amenée de l'état actif dans l'état passif par l'intermédiaire de la section d'entraînement (20) lors du mouvement de fermeture du compartiment pivotant (3), la section d'entraînement (20) ramenant l'extrémité de ressort (21) en direction de la position de fermeture (S) lors du mouvement de fermeture, afin de tendre le ressort spiral (11).

4. Compartiment de rangement (1) selon l'une quelconque des revendications précédentes, **caractérisé en ce que**, pour la mise en œuvre d'une protection contre les pincements, la force d'assistance diminue lors d'un mouvement de l'extrémité de ressort (21) en direction de la position de fermeture (S) et/ou **en ce que** le ressort spiral (10) fournit la force d'assistance dans une zone partielle (TB) de la zone de pivotement (SB).

5. Compartiment de rangement (1) selon la revendication 4, **caractérisé en ce que** le boîtier de réception (11) comprend une butée de ressort (23) pour l'extrémité de ressort (21), agencée dans la zone de pivotement (SB), la butée de ressort (23) délimitant la zone partielle (TB) de la zone de pivotement (SB).

6. Compartiment de rangement (1) selon l'une quelconque des revendications précédentes, **caractérisé en ce que** le boîtier de réception (11) comprend une section de palier (13) et **en ce que** le compartiment pivotant (3) comprend une section de contre-appui (14), la section de palier (13) et la section de contre-appui (14) s'appuyant l'une contre l'autre de manière pivotante pour former le palier de pivotement (4).

7. Compartiment de rangement (1) selon la revendication 6, **caractérisé en ce que** l'unité de force d'assistance (6) comprend un système à palier lisse (15), la section de palier (13) et la section de contre-appui (14) étant montées de manière coulissante par l'intermédiaire du système à palier lisse (15).

8. Compartiment de rangement (1) selon l'une quelconque des revendications précédentes, **caractérisé en ce que** le dispositif d'assistance de force (5) comprend une unité d'actionnement (7), l'unité de force d'assistance (6) pouvant être amenée de l'état passif dans l'état actif lors d'un actionnement de l'unité d'actionnement (7).

9. Compartiment de rangement (1) selon la revendication 8, **caractérisé en ce que** l'unité d'actionnement (7) comprend un levier de verrouillage (16) qui peut pivoter entre une position de verrouillage (SP) et une position de libération (FS), le levier de verrouillage (16) fixant l'extrémité de ressort (21) dans la position de verrouillage (SP) et libérant l'extrémité de ressort (21) dans la position de libération (FS), le levier de verrouillage (16) étant amené à pivoter de la position de verrouillage (SP) dans la position de libération (FS) lors d'un actionnement de l'unité d'actionnement (7), afin d'amener l'unité de force d'assistance (6) de l'état passif dans l'état actif.

10. Compartiment de rangement (1) selon la revendication 9, **caractérisé en ce que** l'unité d'actionnement (7) comprend un ressort de rappel (18), le ressort de rappel (18) sollicitant le levier de verrouillage (16) avec une force de rappel pour le rappel de la position de libération (FS) dans la position de verrouillage (SP).

11. Compartiment de rangement (1) selon l'une quelconque des revendications 8 à 10, **caractérisé en ce que** l'unité d'actionnement (7) comprend un système d'actionnement (8) pour l'actionnement de l'unité de force d'assistance (6), afin de commuter l'unité de force d'assistance (6) de l'état passif dans l'état actif, un actionnement du système d'actionnement (8) étant empêché dans la position de fermeture (S) du compartiment pivotant (3) et étant possible dans la position d'ouverture (O) du compartiment pivotant (3).

12. Compartiment de rangement (1) selon la revendication 11, **caractérisé en ce que** le système d'actionnement (8) est verrouillable, l'unité d'actionnement (8) comprenant un organe clé pour le déverrouillage du système d'actionnement (8).

13. Avion muni du compartiment de rangement (1) selon l'une quelconque des revendications précédentes.
